# EUROPEAN PATENT SPECIFICATION

(11) **EP 2 020 845 B1**
(45) Date of publication and mention of the grant of the patent: **23.07.2014**
(21) Application number: 07730789.0
(22) Date of filing: 28.05.2007
(51) Int. Cl.: A01G 23/00, B27L 1/02, A01G 23/081

(54) **Method for harvesting**
Ernteverfahren
Procédé d'exploitation forestière

(30) Priority: 29.05.2006 FI 20065358
(43) Date of publication of application: 11.02.2009
(73) Proprietor: Fixteri Oy, 40800 Vaajakoski (FI)
(72) Inventor: ROMO, Pasi, 51460 Luusniemi (FI)
(74) Representative: Kolster Oy Ab
(86) International application number: PCT/FI2007/050302
(87) International publication number: WO 2007/138165

(56) References cited:
- EP-A1- 1 512 321
- WO-A1-02/01939
- WO-A1-89/00808
- FI-B- 97 015
- GB-A- 2 357 417
- US-A- 5 377 479

## Description

### BACKGROUND OF THE INVENTION

The invention relates to a method for harvesting, the method comprising: felling trees in a forest; and transporting harvested wood away from the forest for further processing.

Nowadays small-dimensioned wood is harvested from forests to be thinned either as motofelling or as timberman felling. The small-dimensioned trees to be removed in the thinning are felled and delimbed. WO-89/00808-A1 discloses arranging chains around logs in order to form a bundle of logs. The smallest diameter of logs harvested from a forest is typically between 6 and 8 cm depending on the wood species and the forest company. Pulpwood felled and delimbed is transported from the forest with a forwarder to a collection site, from where they are transported to a pulp mill. In some cases, the branches and top refuse delimbed in thinning may be transported to a collection site, wherein they may be chipped and transported to a combustion plant. Since present harvesting performed during thinning comprises a plurality of separate steps and several different sets of equipment are required therein, present harvesting is slow, cumbersome and expensive.

### BRIEF DESCRIPTION OF THE INVENTION

It is the object of this invention to provide a novel and improved method for harvesting.

The method of the invention is characterized by the characterized features of claim 1.

An idea of the invention is to feed the desired timber lots to a baler in a forest for creating different predetermined bale classes. A further idea is to classify the bales created in the forest into different bale classes before they are transported to a further processing site at the latest.

An advantage of the invention is that the cost effectiveness of harvesting improves, while the same equipment can be used to create different kinds of bales already in the forest in connection with the felling.

Further, the idea of the invention is to feed cut-off trees as such to a baler without debarking branches and top refuse. Hereby, trees to be processed are thus cut off and fed, after being cut off, individually or together with a plurality of cut-off trees as such into a baling machine, wherein the trees are cut off to the desired length, compressed and baled. Such a whole-tree bale may thus comprise all elements belonging to one tree, such as the trunk, the top and branches. When the trees are fed directly to the baler after felling, the harvesting includes no extra transfers or processing steps.

It is the idea of an embodiment of the invention to perform the baling during thinning. In thinning, usually various tree species and trees of different sizes are removed, which can be baled in accordance with the desired bale classes by utilizing the solution of the invention. This allows the wood generated in the thinning to also be used further and processed efficiently.

It is the idea of an embodiment of the invention to process different wood sorts intended for different bale classes simultaneously with the baling machine. This allows the baling machine to be used without interruption for processing wood of a broad-leaved wood bale in the feeding chamber and simultaneously for processing coniferous wood in the compression chamber.

It is the idea of an embodiment of the invention to provide the carrier of the baler with a felling device that is suitable for mass processing small-dimensioned wood and capable of holding a plurality of trees cut thereby in a bundle and simultaneously cut new trees. When a suitable amount of small-dimensioned wood is in the felling device, the tree bundle is fed to the baling machine. A processing device provided with such a felling device is efficient in thinning and particularly effective in first-stage thinning, which may involve much small-dimensioned wood.

It is the idea of an embodiment of the invention to create two or more bale classes with the same processing device, each bale class comprising only one tree species. This means that so-called clean bales are created instead of mixed tree bales.

It is the idea of an embodiment of the invention to create two or more different bale classes with the same processing device. This means that bales are not created in the forest merely for chipping and for burning in a combustion plant, but bales to be utilized as raw material for further processing are generated from the trees to be thinned. Even if part of the material contained by the raw material bales were separated into an energy fraction in the manufacture of the raw material, the majority of the wood contained by the raw material bale is anyhow used for producing raw material.

It is the idea of an embodiment of the invention to use the baling machine in the forest for creating bales for the production of charcoal, for which only wood fulfilling predetermined requirements is used. In the production of charcoal, the wood has to be broad-leaved wood. The bales according to this bale class are collected from the forest and transported for processing into charcoal.

It is the idea of an embodiment of the invention to use the baling machine in the forest for creating bales for the production of distillate, for which only wood fulfilling predetermined requirements is used. The bales according to this bale class are collected from the forest and transported for processing into distillate.

It is the idea of an embodiment of the invention to use the baling machine in the forest for creating bales for the production of fibrous material, for which only wood fulfilling predetermined requirements is used. The bales according to this bale class are collected from the forest and transported for processing. The bales are fed to a debarking device, wherein the smaller wood material contained by the bale, such as bark and branches, may be separated and chopped, after which they may be classified into an energy fraction to be used in a combustion plant for energy production or used as fuel in another manner. The larger wood material contained by the bale may be used for the production of chemical pulp or used for the production of another raw material for the chemical forest industry. Accordingly, the division into an energy fraction and a pulp fraction does not take place until in the debarking device, whereas in conventional methods, the division takes place as early as in connection with the felling when trunks are separated from the trees as pulpwood and the felling waste is left to rot in the forest or, in the newest methods, the felling waste is collected from the forest to a collection site, wherein they are baled in a separated step into energy bales. The debarking device may be located in connection with the site of use of the pulp fraction, such as for instance at a pulp mill, or it may be located in connection with a plant producing fuel. The debarking device may be a debarking drum or a corresponding device suitable for detaching bark and other material unsuitable for a pulp fraction.

It is the idea of an embodiment of the invention to create, in a forest comprising mixed wood, birch bales with the same baler for producing birch pulp, for example, and coniferous wood pales comprising pine and spruce for producing pine pulp, for example.

It is the idea of an embodiment of the invention to perform the harvesting and the generation of different bale classes in a forest thinned for the first time.

It is the idea of an embodiment of the invention to classify the different bale classes at the collection site into different bale class piles or the like for long-haul transport. In this case, the bales are further processed efficiently and the mixing of bale classes is avoided.

It is the idea of an embodiment of the invention to mark the different bale classes in the baling machine, whereby their classification into different bale class piles or the like is easy at the collection site. The bale classes may be marked with colour codes or remote-readable identifiers, for example.

It is the idea of an embodiment of the invention that the baling machine comprises measurement devices for measuring the desired characteristics of the different bale classes, such as for example number and weight. This way information is obtained for felling planning and statistics, and furthermore valuable information for controlling the further processes subsequent to the felling.

It is the idea of an embodiment of the invention to use energy bales or the energy fraction of raw material bales for the manufacture of liquid fuels or combustible gases.

### BRIEF DESCRIPTION OF THE FIGURES

Some embodiments of the invention will be described in more detail in the accompanying drawings, in which
Figure 1 schematically shows a side view of a wood-processing device according to the invention, arranged on a movable carrier,
Figure 2 schematically shows a processing device suitable for harvesting according to the invention,
Figures 3 to 6 schematically show some feasible bale classes that can be made in a forest;
Figure 7 schematically shows a bale wherein the wood bundle is tied with a net instead of strips;
Figure 8 schematically shows a system for wood processing according to the invention; and
Figure 9 schematically shows an arrangement wherein a small-dimensioned wood bale is utilized in the manufacture of fibre pulp.

In the figures, some embodiments of the invention are shown in a simplified matter for the sake of clarity. In the figures, like parts are denoted with like reference numerals.

### DETAILED DESCRIPTION OF SOME EMBODIMENTS OF THE INVENTION

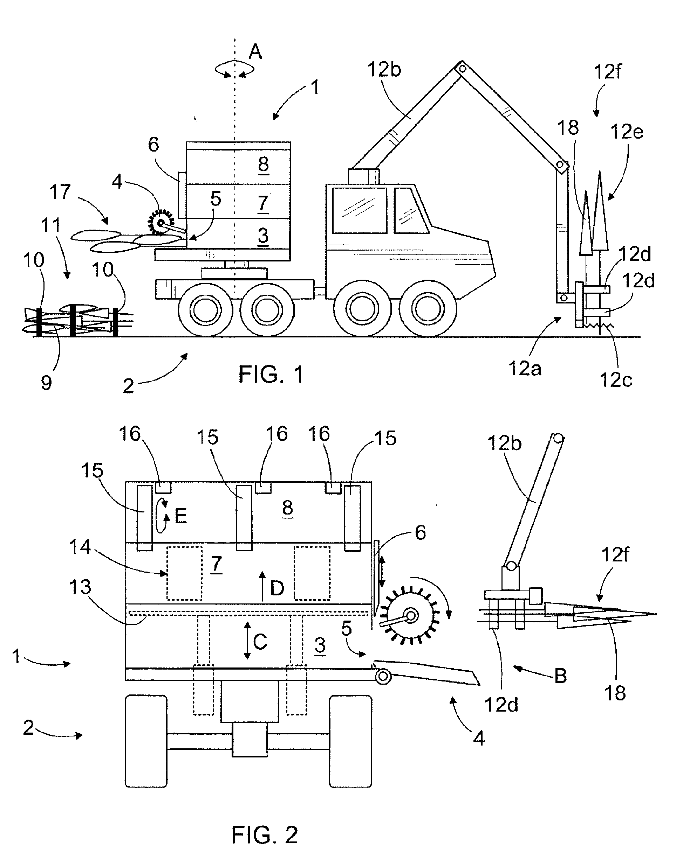

Figure 1 shows a wood processing device that may comprise a baler 1 that may be arranged in a movable carrier 2 that may be a forwarder or the like, for example. The baler 1 may comprise a feeding chamber 3, whereto small-dimensioned wood collected during thinning may be fed by means of feeding members 4. The feeding chamber 3 comprises a feeding opening 5 for feeding wood. Further, a cutting device 6 may be located in connection with the feeding opening 5 for cutting the wood after a suitable dose is fed to the feeding chamber 3. An intermediate chamber 7 may be located above the feeding chamber 3 and, furthermore, a compression chamber 8 may be located above the intermediate chamber 7. If need be, cut-off wood may be stored in the intermediate chamber 7 should previous wood still be under processing in the compression chamber 8. In addition, the intermediate chamber 7 may be used to collect a plurality of cut-off wood doses into one larger lot before transfer to the compression chamber 8. In the compression chamber 8, the wood may be compressed in order to reduce its volume. In addition, compression forms the wood into a bundle 9, around which one or more binding members 10, such as for instance a strip, a band or a net, may be arranged by means of a binding device 16, thus resulting in a bale 11. The compression chamber 8 may be opened in such a manner that the finished bale 11 may be removed from the compression chamber 8. The bale 11 may be dropped to the ground.

Furthermore, the processing device may comprise a felling device 12a that may be arranged in a versatilely movable boom 12b. The felling device 12a comprises cutting means 12c, such as a chain saw for cutting a small-dimensioned tree at the root, and clamping jaws 12d or the like for grabbing the wood being processed and for transferring the cut-off small-dimensioned wood to the feeding members 4 of the baler 1. The clamping jaws 12d of the felling device 12a may be constructed in a manner making it suitable for mass processing of small-dimensioned wood. Such a felling device 12a enables the cutting of the small-dimensioned wood, the transfer to the next small-dimensioned wood, cutting it, and, further allows the mentioned steps to be repeated until the felling device 12a contains a sufficient amount of cut-off small-dimensioned wood 12e, after which a small-dimensioned wood lot 12f collected may be transferred to the baler 1 by means of the felling device 12a and the boom 12b. Such a processing device may perform the felling and the baling completely independently and as an integral operation.

Figure 2 shows the processing device seen from the rear part of the carrier 2. The baler 1 is turned around an axis of a joint between the baler 1 and the carrier 2 to a transverse position in a manner making the feeding opening 5 point in the direction where the felling is performed or in a direction from which the intention is to feed small-dimensioned wood to the baler 1. The wood may be pushed by means of the feeding members 4 in feeding direction B along a predetermined distance into the feeding chamber 3, after which the wood is cut by means of the cutting device 6. The operation of the cutting device 6 may be based on a guillotine-type of cutting blade, a circular saw, a chain saw or any other chipping or shearing cutting member. When the cutting is performed, the feeding conveyor 4 is stopped and the cut-off wood is transferred from the feeding chamber 3 to the intermediate chamber 7. The transfer may be carried out for instance by moving a bottom plate 13 in the feeding chamber in a vertical direction C. The intermediate chamber 7 may comprise means 14 for receiving the wood. These means 14 may include for instance a conveyor or jaws between which the wood may be compressed during intermediate storage. In addition, the wood may be transferred by means of the means 14 from the intermediate chamber 7 to the compression chamber 8. The compression chamber 8 may comprise compression jaws 15 for receiving wood into the compression chamber 8, and by means of which the wood may be compressed into a smaller volume. In some cases, some other compression means, for instance a flexible power transmission member, such as a chain, may be used instead of the compression jaws 15. In addition, the compression chamber 8 may comprise one or more binding devices 16 for winding a suitable binding member 10 around the wood bundle 9 in direction E for creating a bale 11.

Figure 1 shows that the completed bale 11 on the ground is of mixed wood. An energy bale is in question. Furthermore, in Figure 1, a lot of only broad-leaved wood 17, e.g. birch, is fed to the feeding opening 5 of the baler 1, whereby the intention is to create a broad-leaved wood bale. In the situation of Figure 1, spruce 18 is positioned between the jaws 12d of the harvesting device 12a, the intention being to create a spruce bale after the broad-leaved wood bale. The feeding of spruce 18 into the feeding chamber 3 may be started after the broad-leaved wood is transferred to the compression chamber 8. In this case, the baler 1 is able to process wood of two different qualities at the same time for creating bales that differ from each other.

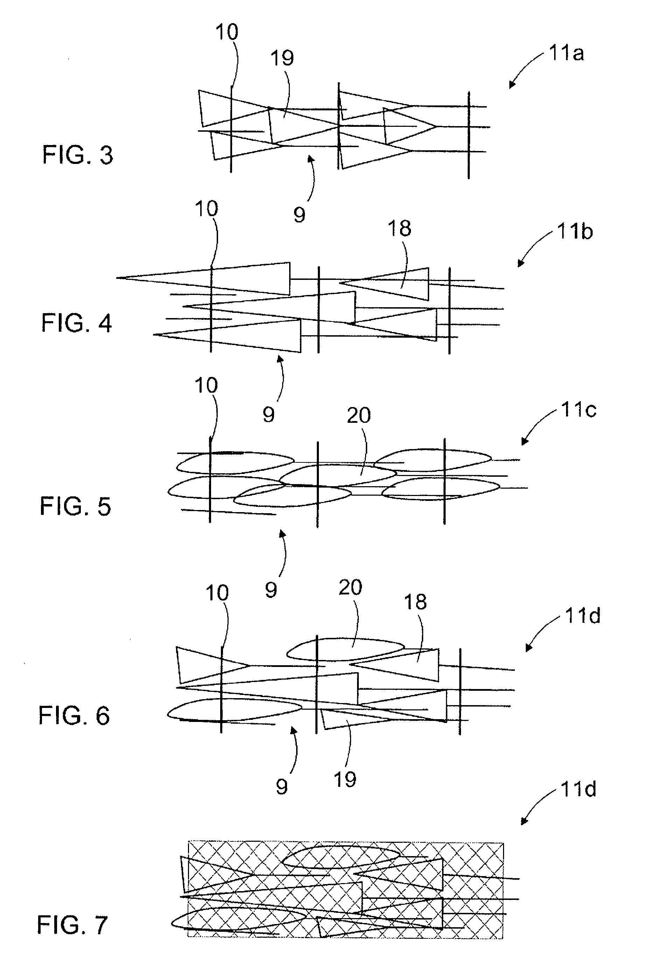

Figure 3 shows a pine bale 11a comprising pinewood 19 only. As can be seen from the figure, the pine bale 11 a may comprise trees with trunks, branches and tops, i.e. the bale is a so-called whole tree bale. Similarly, Figure 4 shows a spruce bale 11 b composed of spruce 18, which is a whole-tree bale at the same time. Furthermore, Figure 5 shows a birch bale 11 c comprising birch 20 only. It is naturally possible to create other tree species-based bale classes, e.g. for aspen, alder etc. Combinations of different tree species may also fulfil the predetermined criteria of some bale class.

A bale class may have one or more other criteria instead of or in addition to the tree species criterion. Feasible criteria include the diameter and condition of the wood to be processes, for example.

Figures 6 and 7 show energy bales 11 d that may be of mixed wood. The energy bale 11d may also comprise wood that is not suitable for use in the manufacture of raw materials. Such wood is obtained from wood classified as deteriorated because of a plant disease or for some other reason. Figure 7 also shows that binding may be carried out with a net.

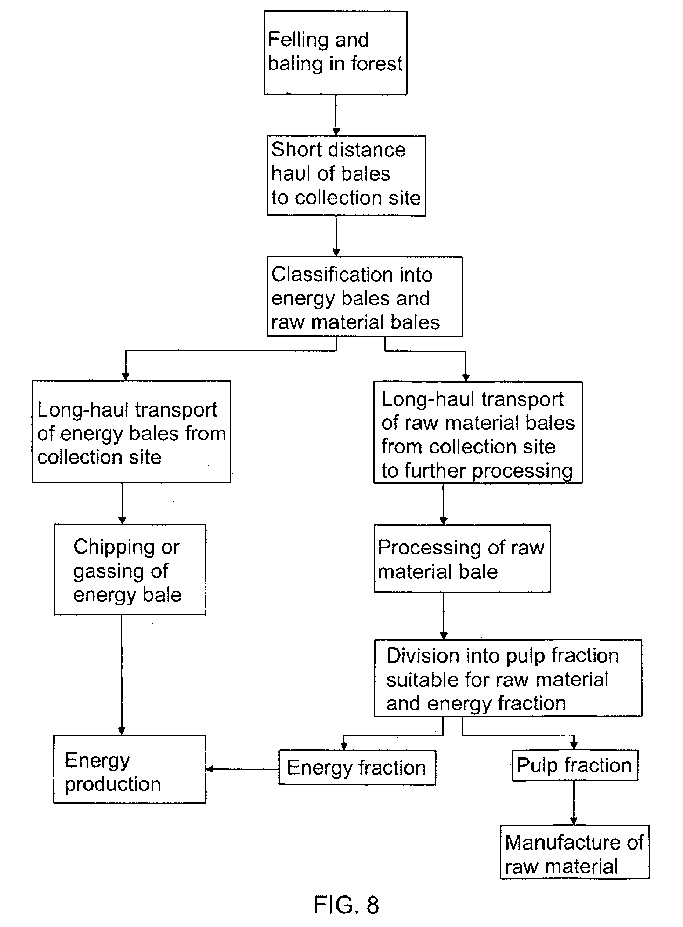

Figure 8 illustrates the steps of a harvesting system.

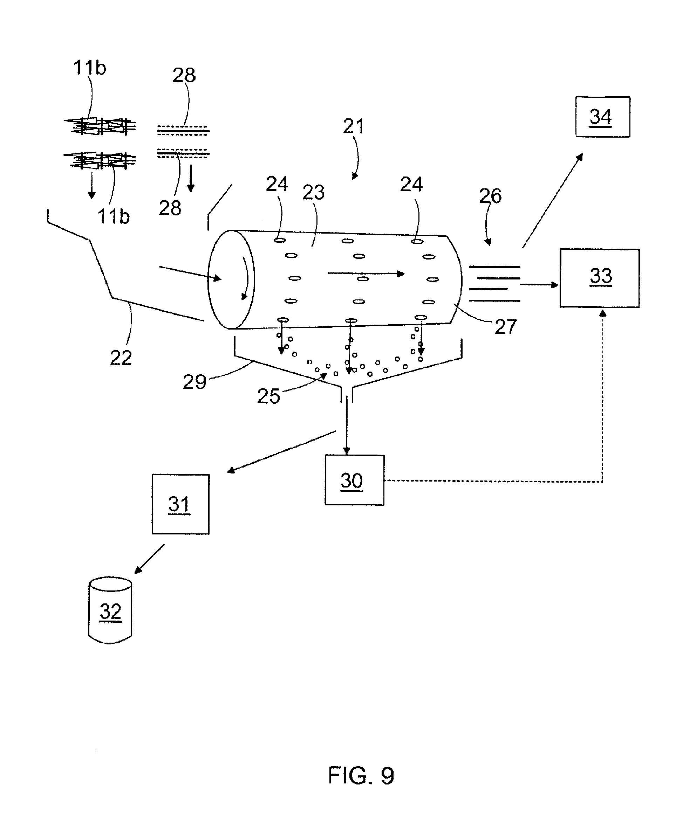

Figure 9 shows an arrangement for further processing of raw material bales. The raw material bales 11 b, in this case spruce bales, may be fed to a feeding station 22 of the debarking device 21 from where they are dosed for processing by the debarking device 21. The debarking device 21 may be a debarking drum arranged rotationally around its longitudinal axis and through which the wood to be processed is run. The circumference 23 of the debarking drum may be provided with openings 24 through which bark detached from the wood inside the debarking drum and the rest of the energy fraction 25 is discharged. In contrast, a pulp fraction 26 does not pass through the openings 24, but is discharged from the debarking drum at the discharge end 27. Pulpwood 28 may also be fed to the debarking device 21 at a predetermined ratio with respect to the raw material bales 11d. There may be for instance 20% whole tree bales and 80% fibre pulpwood. Other mixture ratios may naturally also be used depending on the raw material to be manufactured and the raw material bales to be fed, among other things.

The energy fraction 25 may be recovered by means of a collecting device 29 and it may be transported to a combustion plant 30 for energy production. Alternatively, the energy fraction 25 may be transported to a fuel plant 31, where it may be used for the manufacture of fuel, e.g. liquid fuel 32, gas or coal.

The pulp fraction 26 may be transferred to a pulp plant 33 in connection with the debarking device 21 or to a corresponding plant of the chemical forest industry for manufacture of raw materials. Alternatively, the pulp fraction 26 may be transported for use at some other plant 34 situated at a different site with respect to the debarking device 21. In cases when the debarking device 21 and the combustion plant 30 are located in the vicinity of the raw material plant 33, the energy produced by the energy fraction 25 may be utilized at the plant, as is illustrated by a broken line.

In some cases, the characteristics presented in this application may be used as such, irrespective of other characteristics. On the other hand, the characteristics presented in this application may be combined, if need be, to generate different combinations.

The drawings and the related description are only intended to illustrate the idea of the invention. The details of the invention may vary within the scope of the claims.

## Claims

1. A method for harvesting, the method comprising:
felling trees in a forest; and
transporting harvested wood away from the forest for further processing;
**characterized by**
baling at least part of the wood into bales (11) comprising a wood bundle (8) compressed in a baler and at least one binding member (10) arranged around it;
baling small-dimensioned wood in a felling area in the forest;
feeding cut-off trees as such to the baler (1) without removal of branches and top refuse, and
creating two or more bale classes in the felling area by using the same baler, each bale classes having special criteria with respect to the wood contained by the bale (11).

2. A method as claimed in claim 1, **characterized by** performing the baling during thinning.

3. A method as claimed in claim 1 or 2, **characterized by**
creating two or more different bale classes simultaneously with the same baler (1).

4. A method as claimed in any one of the preceding claims, **characterized by**
creating different bales (11) in the forest by tree classes.

5. A method as claimed in any one of claims 1 to 3, **characterized by**
creating different bale classes (11) in the forest, each being intended for a different end use.

6. A method as claimed in claim 5, **characterized by**
creating raw material bales (11 a to 11c) in the forest and using the wood therein as raw material for further-processed products; and
creating energy bales (11d) in the forest from wood unsuitable for raw material bales and using the wood therein as fuel in energy production.

## Patentansprüche

1. Verfahren zum Ernten, wobei das Verfahren Folgendes umfasst:
Fällen von Bäumen in einem Wald und
Abtransportieren von geerntetem Holz aus dem Wald zur Weiterverarbeitung,
**gekennzeichnet durch**
Bündeln von wenigstens einem Teil des Holzes in Ballen (11), die ein in einer Ballenpresse zusammengepresstes Holzbündel (8) und wenigstens ein um das Holzbündel herum angeordnetes Bindeelement (10) umfassen,
Bündeln von kleindimensioniertem Holz in einem Fällbereich in dem Wald in Ballen,
Zuführen von abgeschnittenen Bäumen, wie sie sind, ohne Entfernen von Zweigen und oberen Abfällen zur Ballenpresse (1) und
Herstellen von zwei oder mehr Ballenklassen im Fällbereich **durch** Verwerdung derselben Ballenpresse, wobei die Ballenklassen jeweils spezielle Kriterien in Bezug auf das im Ballen (11) enthaltene Holz haben.

2. Verfahren nach Anspruch 1, **gekennzeichnet durch**
Durchführen des Bündelns in Ballen während der Durchforstung.

3. Verfahren nach Anspruch 1 oder 2, **gekennzeichnet durch**
gleichzeitiges Herstellen von zwei oder mehr verschiedenen Ballenklassen mit derselben Ballenpresse (1).

4. Verfahren nach einem der vorhergehenden Ansprüche, **gekennzeichnet durch** Herstellen verschiedener Ballen (11) in dem Wald nach Baumklassen.

5. Verfahren nach einem der Ansprüche 1 bis 3, **gekennzeichnet durch**
Herstellen verschiedener Ballenklassen (11) in dem Wald, die jeweils für einen anderen Verwendungszweck vorgesehen sind.

6. Verfahren nach Anspruch 5, **gekennzeichnet durch**
Herstellen von Rohmaterialballen (11a bis 11c) in dem Wald und Verwenden des Holzes in ihnen als Rohmaterial für weiterverarbeitete Produkte und
Herstellen von Energieballen (11d) in dem Wald aus für Rohmateriaballen ungeeignetem Holz und Verwenden des Holzes in ihnen als Brennstoff in der Energieerzeugung.

## Revendications

1. Procédé pour la récolte, le procédé comprenant :
l'abattage d'arbres dans une forêt ; et
le transport du bois récolté hors de la forêt pour un traitement ultérieur ;
**caractérisé par**
la mise en balles (11) d'au moins une partie du bois comprenant un ballot de bois (8) compressé dans une presse à balles et au moins un élément d'attache (10) agencé autour de celui-ci ;
la mise en balles de bois de petite taille dans une zone d'abattage dans la forêt ;
l'alimentation d'arbres coupés tels quels dans la presse à balles (1) sans retirer de branches et de déchets de cime, et
la création de deux ou plusieurs catégories de balles dans la zone d'abattage, à l'aide de la même presse à balles, chaque catégorie de balles présentant des critères spéciaux par rapport au bois contenu dans la balle (11).

2. Procédé selon la revendication 1, **caractérisé par** l'exécution de la mise en balles pendant la coupe.

3. Procédé selon la revendication 1 ou 2, **caractérisé par** la création de deux ou plusieurs catégories différentes de balles simultanément avec la même presse à balles (1).

4. Procédé selon l'une quelconque des revendications précédentes, **caractérisé par** la création de balles (11) différentes dans la forêt en fonction des catégories d'arbres.

5. Procédé selon l'une quelconque des revendications 1 à 3, **caractérisé par** la création de différentes catégories de balles (11) dans la forêt, chacune étant destinée à un usage final différent.

6. Procédé selon la revendication 5, **caractérisé par**
la création de balles de matière première (11a à 11c) dans la forêt et l'utilisation du bois contenu dans celles-ci comme matière première pour des produits transformés ultérieurement ; et
la création de balles énergétiques (11d) dans la forêt, à partir de bois inapproprié pour des balles de matière première, et l'utilisation du bois contenu dans celles-ci comme combustible dans la production d'énergie.
